# NEUE EUROPÄISCHE PATENTSCHRIFT

(11) **EP 1 750 112 B2**
(45) Veröffentlichungstag und Bekanntmachung des Hinweises auf die Entscheidung über den Einspruch: **21.09.2022**
(45) Hinweis auf die Patenterteilung: 19.04.2017
(21) Anmeldenummer: 06011759.5
(22) Anmeldetag: 07.06.2006
(51) Int. Cl.: G01M 17/00

(54) **Vorrichtung zum Einbringen zusätzlicher Kräfte bei der Durchführung von Crash-Versuchen und dazugehöriger Versuchsaufbau**
Device for introducing additional forces when carrying out crash tests and corresponding test setup
Procédé d'application de forces supplémentaires lors de l'exécution d'essais de collision et montage d'essai correspondant

(30) Priorität: 01.08.2005 DE 202005012077 U
(43) Veröffentlichungstag der Anmeldung: 07.02.2007
(73) Patentinhaber: Humanetics Austria GmbH, 4020 Linz (AT)
(72) Erfinder: Steffan, Hermann, 4020 Linz (AT); Moser, Andreas, 4020 Linz (AT); Hofinger, Manfred, Top 16, A-4020 Linz (AT)
(74) Vertreter: Manitz Finsterwald Patent- und Rechtsanwaltspartnerschaft mbB

(56) Entgegenhaltungen:
- WO-A-99/13311
- DE-A1- 10 050 080
- DE-A1- 19 927 944
- US-A1- 2004 230 394
- US-A1- 2005 081 656

## Beschreibung

Die vorliegende Erfindung betrifft einen Versuchsaufbau mit einer Vorrichtung zum Einbringen zusätzlicher Kräfte und/oder Verschiebungen bei der Durchführung von so genannten Crash-Versuchen, insbesondere so genannten inversen Crash-Versuchen, bei denen die Verzögerungskräfte eines realen Aufpralls simuliert werden, indem ein Crash-Schlitten entsprechend der realen Verzögerungskurve beschleunigt wird. Zudem betrifft die Erfindung verschiedene Versuchsaufbauten zur Durchführung von Crash-Schlittenversuchen, bei denen eine derartige Vorrichtung verwendet wird.

Wenn ein Fahrzeug bei einem Unfall gegen einen Widerstand prallt, beispielsweise gegen ein anderes Fahrzeug, so wird es entsprechend der Verformbarkeit des Fahrzeuges und des Widerstands verzögert. Diese Verzögerung initiiert eine Beschleunigung auf die beweglichen Massen des Fahrzeuges. Um diese Beschleunigungen untersuchen zu können, kann man reale Crash-Versuche durchführen, bei welchen ein Fahrzeug auf eine gewünschte Geschwindigkeit beschleunigt wird und auf ein Hindernis prallt. Diese Versuche sind allerdings aufwändig und kostspielig, da bei jedem Versuch ein komplettes Fahrzeug zerstört wird. Alternativ können so genannte Crash-Schlitten-Versuche durchgeführt werden, bei denen ein Schlitten auf die gewünschte Geschwindigkeit beschleunigt wird und dann mit dieser Geschwindigkeit auf ein verformbares Hindernis prallt. Umgekehrt kann die Verzögerung eines realen Crash-Versuches auch durch eine Beschleunigung des Versuchsobjektes simuliert werden. Das heißt, die bei einem Aufprall auf ein Hindernis auf die beweglichen Massen des Fahrzeuges wirkenden Beschleunigungskräfte werden direkt über eine Beschleunigung des Crash-Schlittens auf das Versuchsobjekt ausgeübt. In diesem Fall spricht man von einem inversen Crash-Versuch. Diese Versuche haben den Vorteil, dass reale Verzögerungskurven sehr gut nachgefahren werden können.

Unabhängig vom Typ des durchgeführten Crash-Versuches möchte man bei einem solchen Versuch auch Intrusionen, das heißt das Eindringen von Fahrzeugteilen oder auch Fremdkörpern in die Fahrgastzelle, simulieren, da diese eine der häufigsten Ursachen für Verletzungen der Fahrzeuginsassen bei Verkehrsunfällen sind. Solche Intrusionen treten beispielsweise auf, wenn bei einer Frontalkollision die Pedale, und eventuell auch eine Bodenplatte unter den Pedalen, weiter in den Fußraum des Fahrzeuges eindringen, oder wenn bei einer Seitenkollision die Seitentüren durch ein anderes Fahrzeug oder einen Gegenstand, auf den das Fahrzeug aufprallt, eingedrückt werden. Die bei solchen Intrusionen auftretenden Effekte möchte man im Rahmen von Crash-Versuchen, seien es reale Crash-Schlitten-Versuche oder inverse Crash-Schlitten-Versuche, simulieren. Auch andere auftretende Kräfte, wie beispielsweise die bei einem Aufprall auftretenden durch die Straffung des Sicherheitsgurtes auf einen angeschnallten Insassen wirkenden Kräfte, oder Verschiebungen der Lenksäule sollen im Rahmen der genannten Versuche analysiert werden.

US 2005/0081656 A1 offenbart einen Crash-Simulator zur Simulation eines Seitenaufpralls mittels einer Doppelschlittenanordnung. Der eine Schlitten weist eine Bremsvorrichtung auf.

Aus WO 99/13311 A1 ist eine Schlittenanlage zur Crash-Simulation bekannt, bei der zusätzlich zu der Schlittenbewegung eine dynamische Intrusion des Fußraums eines Kraftfahrzeugs nachgestellt werden kann. Eine Fußraumplatte wird mittels einer Kurvenscheibe oder mittels Kolben-/Zylinder-Systemen angetrieben.

US 2004/0230394 A1 betrifft ein Crash-Simulationssystem mit einem Basisschlitten, welcher eine Simulationsplattform trägt. Der Basisschlitten ist mit einem Beschleunigungs- und einem Verzögerungsgenerator gekoppelt. Zum Abbremsen der Simulationsplattform ist ein weiterer Verzögerungsgenerator vorgesehen.

Aus DE 199 27 944 A1 ist ein Verfahren und eine Vorrichtung zur Durchführung von Crash-Schlitten-Versuchen bekannt, bei der eim Crash-Schlitten mittels einer Beschleunigungsvorrichtung beschleunigt wird und eine gewünschte Beschleunigungskurve mithilfe einer auf den Crash-Schlitten wirkenden Bremsvorrichtung erzielt wird.

DE 100 50 080 A1 beschreibt einen zylindergetriebenen Crash-Schlitten mit einer ebenfalls zylindergetriebenen Fußplatte zur Simulation von Fußraumintrusionen.

Es ist daher die Aufgabe der vorliegenden Erfindung, einen Versuchsaufbau mit einer Vorrichtung der eingangs genannten Art zur Verfügung zu stellen, mit dessen Hilfe bei der Durchführung von Crash-Versuchen auftretende zusätzliche Kräfte und/oder Verschiebungen möglichst realitätsnah simuliert werden können.

Zudem sollen geeignete Versuchsaufbauten zur Simulation der oben genannten Vorgänge unter Verwendung der erfindungsgemäßen Vorrichtung zur Verfügung gestellt werden.

Diese Aufgabe wird durch einen Versuchsaufbau gemäß Anspruch 1 gelöst.

Die erfindungsgemäße Vorrichtung weist einen Zylinder mit einer Drucckammer auf, deren Volumen durch einen Kolben begrenzt wird, der über eine Schubstange auf das Versuchsobjekt wirkt. Zudem weist die Vorrichtung eine insbesondere auf die Schubstange wirkende Bremseinrichtung und eine Regeleinrichtung zur Regelung der Bremskraft während der Durchführung eines Versuches auf.

Die zur Durchführung des Versuches benötigte Kraft in Beschleunigungsrichtung wird beispielsweise durch ein in der Druckkammer vorgesehenes, unter Druck stehendes Hydraulikfluid erzeugt. Die erzeugte Kraft in Beschleunigungsrichtung ist dabei größer als die zur Beschleunigung entsprechend der gewünschten Beschleunigungskurve nötige Kraft. Die gewünschte Beschleunigungskurve wird über die Bremseinrichtung erzielt. Die Erzeugung der Beschleunigung und die Anpassung an eine Sollkurve sind somit voneinander getrennt. Im Vergleich zu Vorrichtungen, bei denen die Beschleunigung direkt passend, d.h. entsprechend einer vorgegebenen Beschleunigungskurve, erzeugt wird, kann die erfindungsgemäße Vorrichtung mit deutlich geringerem Aufwand betrieben werden. Während der Durchführung eines Versuches kann die Regeleinrichtung die Bremskraft in Echtzeit regeln, so dass Kalibrierungsversuche im Vorfeld weitestgehend entfallen.

Bevorzugte Ausführungsformen der vorliegenden Erfindung sind in den Unteransprüchen sowie der nun folgenden Beschreibung enthalten.

Gemäß einer bevorzugten Ausführungsform der Erfindung ist die Druckkammer mit einem Druckspeicher verbunden, beispielsweise über eine Schnellkupplung. Alternativ kann die Druckkammer auch mit einem Kompressor zur Druckerzeugung verbunden werden. In beiden Fällen kann auf einfache Weise ein sehr hoher Druck in der Druckkammer erzeugt werden, und eine wiederholte Durchführung von Versuchen ist einfach möglich.

Der Rückzug des Kolbens nach Durchführung eines Versuches kann über Unterdruck erfolgen.

Vorzugsweise weist die Druckkammer ein Sicherheitsventil zur Begrenzung des Maximaldruckes auf. Dadurch wird eine Beschädigung der Vorrichtung durch einen Überdruck vermieden.

Die Schubstange ist vorzugsweise derart ausgebildet, dass sie mit einem variablen Aufbau verbindbar ist. Beispielsweise kann an einer Frontseite der Schubstange ein Innengewinde vorgesehen sein, mit dem ein Aufbau verschraubt werden kann. Bei dem Aufbau kann es sich beispielsweise um Karosserieteile oder eine aus Pedal und Fußstütze bestehende Fußraumanordnung handeln. Eine solchermaßen ausgebildete Schubstange gewährleistet eine hohe Flexibilität, da die Vorrichtung für verschiedenartige Versuche und in verschiedenartigen Versuchsaufbauten eingesetzt werden kann.

Nach einer weiteren Ausgestaltung der Erfindung ist ein Drucksensor an die Druckkammer angeschlossen, dessen Ausgangssignal an eine Steuereinrichtung zur Steuerung der Druckerzeugung übertragen wird. Bei der Steuereinrichtung kann es sich beispielsweise um einen normalen Computer handeln. Über die Rückkopplung mit dem Druckerzeuger wird die exakte Druckerzeugung in der Druckkammer gewährleistet.

Nach einer weiteren vorteilhaften Ausgestaltung der Erfindung ist die auf die Schubstange wirkende Bremseinrichtung hydraulisch betätigbar. Damit ist eine exakte Steuerung und Regelung besonders gut möglich. Aufgrund der verhältnismäßig geringen benötigten Menge an Hydraulikflüssigkeit können Ventile mit verhältnismäßig geringem Durchfluss, insbesondere Standardhydraulikventile, verwendet werden, die auch in Echtzeit geregelt werden können. Vorzugsweise wird ein Servoventil verwendet. Unabhängig vom verwendeten Ventiltyp kann das Ventil bzw. können die Ventile direkt auf der Bremseinrichtung angebracht sein. Das oder die Ventile ist bzw. sind vorzugsweise so gestaltet, dass die Bremse ihre volle Bremswirkung besitzt, wenn die Stromzufuhr zu der Vorrichtung unterbrochen wird.

Nach einer bevorzugten Ausführungsform der Erfindung ist die Bremseinrichtung zur hydraulischen Steuerung der Bremskraft mit einem Hydraulikaggregat verbunden. Dieses Hydraulikaggregat weist vorzugsweise eine Pumpe zum Erzeugen des nötigen Druckes und einen Zwischenspeicher auf, insbesondere einen Blasenspeicher. Dadurch kann sichergestellt werden, dass auch im Fall eines Ausfalls oder einer Minderleistung der Pumpe der nötige Druck noch über einen gewissen Zeitraum erhalten bleibt. Das Hydraulikaggregat ist im Übrigen vorteilhafterweise beschleunigungsfest ausgebildet, so dass es auch auf einem Crash-Schlitten montiert und verwenden kann. Es kann auch ein Hydraulikaggregat für zwei oder mehr Zylinder verwendet werden.

Nach einer weiteren vorteilhaften Ausgestaltung der Erfindung weist die Vorrichtung einen Beschleunigungssensor zum Messen der Beschleunigung der Schubstange auf, wobei die Bremskraft in Abhängigkeit von dem Ausgangswert des Beschleunigungssensors regelbar ist. Die Signale eines solchen Beschleunigungssensors, der vorzugsweise auf der Schubstange selbst angebracht wird, können in Echtzeit von der Regeleinrichtung überwacht werden, so dass der gesamte Beschleunigungsverlauf in Echtzeit geregelt werden kann. Bei dieser Regelung kann eine Lernfunktionalität vorgesehen sein, welche den erzeugten Beschleunigungsverlauf mit dem gewünschten Beschleunigungsverlauf vergleicht. Falls bei diesem Vergleich eine Abweichung von dem gewünschten Beschleunigungsverlauf festgestellt wird, kann die Regelung bei einer nachfolgenden Durchführung des gleichen Versuches eine Korrektur vornehmen, so dass die Abweichung von der Sollkurve sich beim Durchführen einer Versuchsreihe im Laufe der Zeit verringert.

Vorzugsweise sind aus Sicherheitsgründen zwei voneinander unabhängige Beschleunigungssensoren vorgesehen, deren Signale elektronisch miteinander verglichen werden. Beim Überschreiten einer gewissen tolerierten Abweichung der beiden Signale voneinander wird die Schubstange voll abgebremst. Aus dem Ausgangswert des Beschleunigungssensors können zudem die Geschwindigkeit und der Ausfahrweg der Schubstange berechnet und mit Grenzwerten verglichen werden. Beim Überschreiten dieser Grenzwerte kann die Schubstange dann voll abgebremst werden. Durch diese Sicherheitsmaßnahmen wird ein Anschlagen des Kolbens an der Bremse vermieden.

Zur Erhöhung der Sicherheit kann ein Sensor, beispielsweise ein so genannter HAL-Sensor, vorgesehen sein, der den Ausfahrweg der Schubstange überwacht. Beim Überschreiten eines vorgegebenen Ausfahrweges wird die Bremse voll aktiviert, um zu vermeiden, dass es zu einem Anprall des Kolbens gegen die Bremse kommt.

Nach einer weiteren vorteilhaften Ausführungsform der Erfindung weist die Schubstange einen dreieckigen Querschnitt auf. Dies erlaubt eine besonders einfache und wirkungsvolle Konstruktion der Bremse.

Vorzugsweise sind zusammen mit einer solchen Schubstange mit dreieckigem Querschnitt drei jeweils an einer Oberfläche der Schubstange anliegende Bremsklötze vorgesehen, die hydraulisch gesteuert werden. Auf diese Weise erhält man sowohl eine gute Führung der Schubstange als auch eine hohe Bremswirkung.

Vorzugsweise ist die Verbindung zwischen der Schubstange und dem Kolben über ein energieabsorbierendes Bauteil hergestellt, insbesondere über ein mechanisches Stauchrohr. Falls es aufgrund einer Fehlfunktion zu einem Anprall des Kolbens gegen die Bremse kommt, wird die Energie der Schubstange von dem mechanischen Stauchrohr absorbiert. Dieses kann vergleichsweise schnell ausgetauscht werden, und es entstehen in diesem Fall geringere Kosten, als wenn bei einem Anprall des Kolbens gegen die Bremse die Bremse selbst oder Hydraulikbauteile beschädigt werden.

Vorzugsweise ist die gesamte Vorrichtung so ausgebildet, dass ihre Funktionsfähigkeit auch dann nicht beeinträchtigt ist, wenn sie hohen Beschleunigungen ausgesetzt ist. Beispielsweise kann sie beschleunigungsfest bis zu Beschleunigungen von 30g (g = 9,81 m/s²) sein. Die Vorrichtung kann dann auf einem Crash-Schlitten montiert und verwendet werden, ohne dass sie Schaden leidet.

Erfindungsgemäß kann die Vorrichtung gemeinsam mit einem Versuchsobjekt auf einem Crash-Schlitten, insbesondere einem Crash-Schlitten für so genannte inverse Crash-Versuche, montiert sein. Mit Hilfe eines derartigen Versuchsaufbaus kann eine zusätzliche Intrusion eines zu dem Fahrzeug gehörigen Teils simuliert werden, welches zusätzlich beschleunigt ist. Beispielsweise kann das Eindringen von Pedalen in den Fußraum simuliert werden.

Alternativ kann auch ein Versuchsaufbau zur Durchführung eines Crash-Schlittenversuches möglich, bei dem eine erfindungsgemäße Vorrichtung feststehend separat von einem Crash-Schlitten, insbesondere einem Crash-Schlitten für so genannte inverse Crash-Versuche montiert ist. Ein solcher Versuchsaufbau ist beispielsweise vorteilhaft, wenn ein Seitenaufprall oder ein Eindringen eines feststehenden Gegenstandes in das Fahrzeuginnere simuliert werden soll.

Unabhängig von dem konkreten Versuchsaufbau wird vorteilhafter Weise die gesamte erfindungsgemäße Vorrichtung, wenn sie im Rahmen von Crash-Schlitten-Versuchen verwendet wird, von einer separaten Steuerung gesteuert. Diese Steuerung benötigt lediglich ein Startsignal von der Steuerung einer Antriebsvorrichtung für den Crash-Schlitten. Beispielsweise kann die Vorrichtung gestartet werden, wenn eine vorbestimmte Zeit seit Start der Antriebsvorrichtung des Crash-Schlittens abgelaufen ist. Zu diesem Zeitpunkt wird dann die Bremsvorrichtung gelöst, so dass die Schubstange beschleunigt wird. Die erfindungsgemäße Vorrichtung kann aber auch bereits vor dem Start des Crash-Schlittens gestartet werden. Dadurch, dass die erfindungsgemäße Vorrichtung nur ein Startsignal von der Steuerung des Crash-Schlittens bzw. des gesamten Versuchsaufbaus benötigt, kann sie schnell und einfach in einen Versuchsaufbau integriert werden.

Nach einer vorteilhaften Weiterbildung der Erfindung kann bei den genannten Versuchsaufbauten an der Schubstange der Vorrichtung zur Durchführung einer Simulation einer Fußraumintrusion eine Fußraumeinheit befestigt sein, welche beispielsweise aus Pedalen und einer Fußstützplatte besteht.

Falls ein Seitenanprall simuliert werden soll, kann an der Schubstange ein Seitenverkleidungselement befestigt sein.

Zur Durchführung einer Simulation eines Straffungsvorgangs eines Sicherheitsgurtes bei einem Aufprall kann an der Schubstange auch ein Sicherheitsgurt befestigt sein. Ebenfalls möglich ist der Einsatz der erfindungsgemäßen Vorrichtung mit einem Minischlitten und/oder zum Testen einzelner Komponenten.

Im Folgenden wird die vorliegende Erfindung anhand eines Ausführungsbeispiels einer erfindungsgemäßen Vorrichtung und zwei Ausführungsbeispielen für einen erfindungsgemäßen Versuchsaufbau, in dem die erfindungsgemäße Vorrichtung zur Anwendung kommt, beschrieben.

Dabei zeigen die Figuren:
- Fig. 1: eine perspektivische Ansicht einer erfindungsgemäßen Vorrichtung,
- Fig. 2: eine perspektivische Explosionsdarstellung eines die Bremseinrichtung umfassenden Ausschnitts aus der Fig. 1,
- Fig. 3: eine schematische Darstellung eines Versuchsaufbaus zur Simulation einer Fußraumintrusion,
- Fig. 4: eine schematische Darstellung eines Versuchsaufbaus zur Simulation eines Seitenaufpralls.

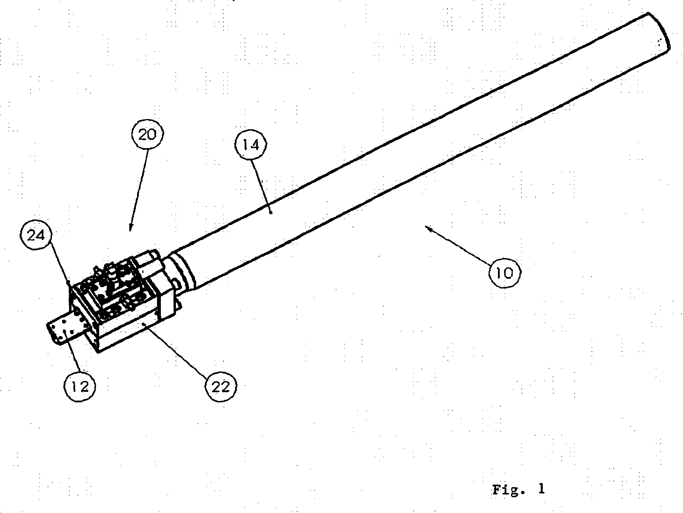

Die in Fig. 1 gezeigte Vorrichtung 10 weist einen lang gestreckten Zylinder 14 auf, in dem sich eine in den Figuren nicht sichtbare Druckkammer befindet. Das Volumen der Druckkammer wird von einem in den Figuren ebenfalls nicht sichtbaren Kolben begrenzt, der eine in Fig. 1 links erkennbare Schubstange 12 mit dreieckigem Querschnitt verschiebt.

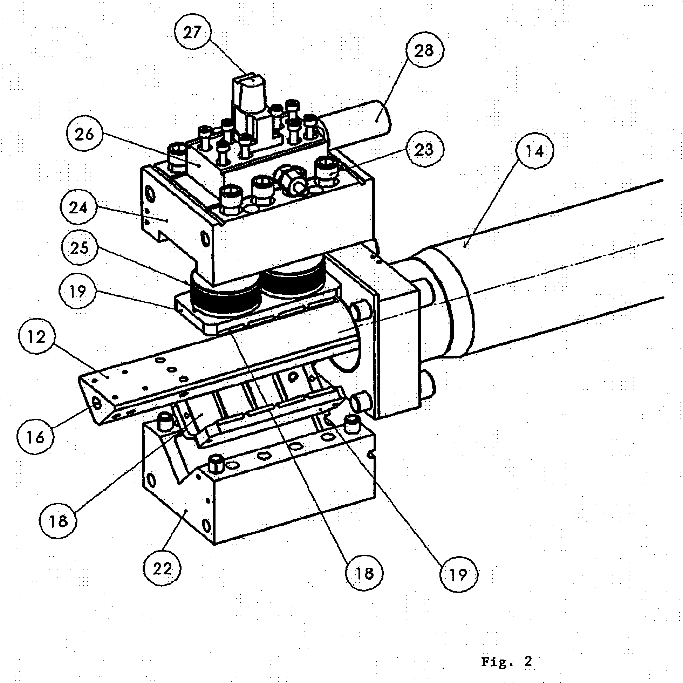

Eine Bremseinrichtung 20, deren Bremskraft von einer Regeleinrichtung geregelt werden kann, wirkt auf die Schubstange 12. Die in der Fig. 2 noch besser zu erkennende Schubstange 12 weist an der aus der Druckkammer ragenden Seite ein Innengewinde 16 auf, welches zur Befestigung eines variablen Aufbaus dient.

Man erkennt in Fig. 2, dass die Bremseinrichtung 20 ein oberes Gehäuseteil 24 und ein unteres Gehäuseteil 22 aufweist, die mit Hilfe von Schrauben 23 aneinander befestigt sind. Die eigentliche Bremse ist von drei mit Bremsbelägen 18 versehenen Bremsklötzen 19 gebildet, die an allen drei Oberflächen der Schubstange 12 an selbige angepresst werden können. Die Bremseinrichtung 20 ist hydraulisch über zwei in Fig. 2 oberhalb der Schubstange 12 liegende Hydraulikzylinder 25 betätigbar, die die Bremsbeläge 18 eines oberen Bremsklotzes 19 auf die entsprechende obere Oberfläche der Schubstange 12 pressen. Die beiden verbleibenden Oberflächen der Schubstange 12 werden dadurch zugleich gegen die in dem unteren Gehäuseteil 22 angeordneten Bremsklötze mit Bremsbelägen 18 gepresst.

Auf dem oberen Gehäuseteil 24 der Bremseinrichtung 20 ist eine Ventilanschlussplatte 26 vorgesehen, an der ein Hydraulikventil 27 zum Lösen der Bremseinrichtung über die Hydraulikzylinder 25 angebracht ist. Ein in den Figuren nicht dargestelltes Hydraulikaggregat versorgt die Bremse über den Anschluss 28. Das Hydraulikaggregat kann nur eine oder auch mehrere erfindungsgemäße Vorrichtungen versorgen und wird über eine zentrale Steuereinheit einer entsprechenden Versuchsanordnung angesteuert.

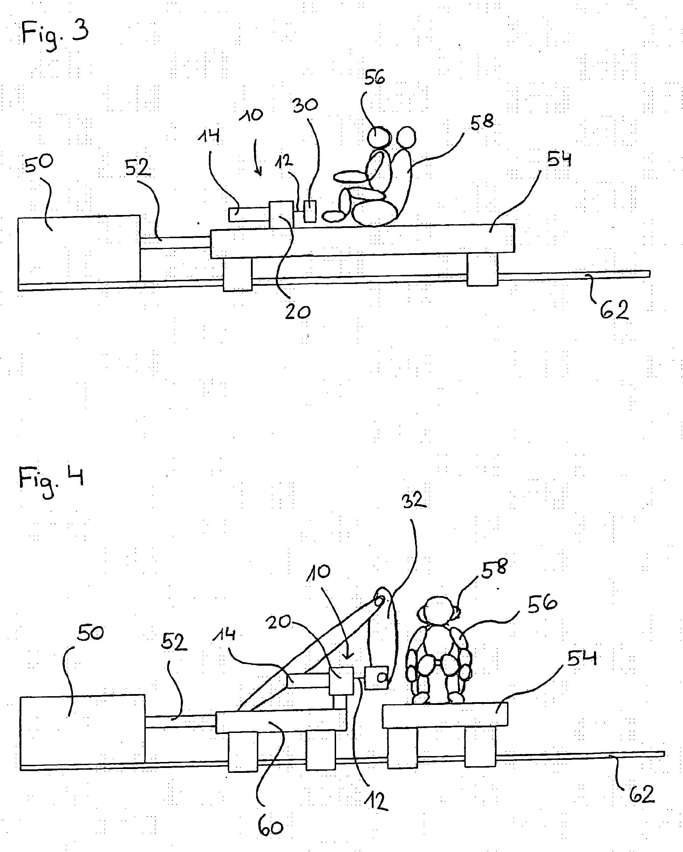

Bei dem in Fig. 3 dargestellten Versuchsaufbau ist eine Vorrichtung 10, wie sie im vorstehenden Abschnitt beschrieben wurde, auf einem auf einer Schiene 62 beweglichen Crash-Schlitten 54 montiert, der von einer Antriebsvorrichtung 50 beschleunigt wird, mit der der Schlitten 54 über eine Schubstange 52 verbunden ist. Die oben genauer beschriebene Vorrichtung 10 ist über ihre Schubstange 12 mit einer in der Fig. 3 nur schematisch dargestellten Fußraumeinheit 30 verbunden, welche beispielsweise Pedale und eine Fußplatte umfassen kann. Zusätzlich ist auf dem Crash-Schlitten 54 als Versuchsobjekt ein Sitz 58 mit einem Dummy 56 angebracht, so dass die Auswirkungen der Intrusion einer Fußraumeinheit auf einen Fahrzeuginsassen zusätzlich zu dem eigentlichen Aufprall des Fahrzeugs simuliert werden können.

Die in dem Zylinder 14 der Vorrichtung 10 angeordnete Druckkammer wird vor Durchführung des Versuches befüllt. Zu diesem Zweck kann sie über eine Schnellkupplung mit einem Druckspeicher verbunden sein. Zudem wird ebenfalls vor Durchführung des Versuches das Hydraulikaggregat, welches die Bremseinrichtung versorgt, in Betrieb genommen und der vorgesehene Zwischenspeicher wird von der Pumpe mit Hydraulikfluid befüllt. Die Bremse bremst vor dem Start des Versuches mit voller Bremskraft. Wenn die Druckkammer und der Zwischenspeicher des Hydraulikaggregates gefüllt sind, kann eine entsprechendes Signal an die zentrale Steuerung der Antriebsvorrichtung gegeben werden, um zu verhindern, dass diese zu früh den Start der Vorrichtung auslöst. Zu einem vorgewählten Zeitpunkt gibt nämlich eine zentrale Steuereinrichtung zur Steuerung der Antriebsvorrichtung 50 ein Startsignal an die Vorrichtung 10, welches die anfängliche Beschleunigung der Schubstange 12 hervorruft. Die in den Figuren nicht dargestellte Regeleinrichtung, bei der es sich beispielsweise um einen üblichen Heimcomputer mit entsprechender Software handeln kann, regelt die über die Bremseinrichtung 20 auf die Schubstange 12 wirkende Bremskraft so, dass insgesamt eine erwünschte Beschleunigungskurve erhalten wird. Dazu sind zwei in den Figuren nicht dargestellte Beschleunigungssensoren auf der Schubstange 12 vorgesehen, deren Signale in Echtzeit von der Regeleinrichtung überwacht werden. Die gemessene Beschleunigung der Schubstange 12 wird mit einem Sollwert verglichen, und die Bremskraft wird über das Hydraulikventil 27 der Bremsvorrichtung 20 dementsprechend geregelt.

Die Fig. 4 zeigt einen weiteren Versuchsaufbau zur Simulation eines Seitenaufpralls. Die erfindungsgemäße Vorrichtung 10 ist auch hier wieder auf einem Crash-Schlitten 54 angebracht, der über eine Schubstange 52 mit einer Antriebsvorrichtung 50 verbunden ist. Der Dummy 56 und der Fahrzeugsitz 58 befinden sich jedoch auf einem separaten weiteren Schlitten 60. Die Schubstange 12 der Vorrichtung 10 ist mit einem Seitenverkleidungselement 32 verbunden, welches bei einer Beschleunigung der Schubstange 12, die wie oben beschrieben erzeugt wird, auf den Dummy 56 aufprallt.

Selbstverständlich sind andere Versuchsaufbauten als die beiden in den Fig. 3 und 4 beispielhaft dargestellten Versuchsaufbauten denkbar. Insbesondere kann die erfindungsgemäße Vorrichtung 10 auch zur Simulation eines Straffungsvorgangs eines Sicherheitsgurtes oder zur Verschiebung einer Lenksäule verwendet werden, wobei in diesem Fall die Schubstange 12 mit einem Sicherheitsgurt beziehungsweise der Lenksäule verbunden wird.

### Bezugszeichenliste

- 10: Vorrichtung zum Einbringen zusätzlicher Kräfte
- 12: Schubstange
- 14: Zylinder
- 16: Innengewinde
- 18: Bremsbelag
- 19: Bremsklotz
- 20: Bremseinrichtung
- 22: unteres Gehäuseteil
- 23: Schraube
- 24: oberes Gehäuseteil
- 25: Hydraulikzylinder
- 26: Ventilanschlussplatte
- 27: Ventil
- 28: Anschluss für Hydraulikfluid
- 30: Fußraumeinheit
- 32: Seitenverkleidungselement
- 50: Antriebsvorrichtung
- 52: Schubstange
- 54: Crash-Schlitten
- 56: Dummy
- 58: Sitz
- 60: Schlitten
- 62: Schiene

## Patentansprüche

1. Versuchsaufbau zur Durchführung eines Crash-Schlitten-Versuches mit einer Vorrichtung (10) zum Einbringen zusätzlicher Kräfte bei der Durchführung von so genannten Crash-Versuchen, insbesondere so genannten inversen Crash-Versuchen, bei denen die auf ein Versuchsobjekt wirkenden Verzögerungskräfte eines realen Aufpralls simuliert werden, indem ein Crash-Schlitten (54) entsprechend einer einen realen Crash-Versuch simulierenden realen Verzögerungskurve beschleunigt wird, **dadurch gekennzeichnet, dass** die Vorrichtung (10) gemeinsam mit einem Versuchsobjekt (56, 58) auf einem Crash-Schlitten (54), insbesondere einem Crash-Schlitten für so genannte inverse Crash-Versuche, montiert ist oder dass die Vorrichtung (10) feststehend separat von einem Crash-Schlitten montiert ist; dass an der Schubstange (12) der Vorrichtung (10) zur Durchführung einer Simulation einer Fußraumintrusion eine Fußraumeinheit (30) befestigt ist, oder dass an der Schubstange (12) der Vorrichtung (10) zur Durchführung einer Simulation eines Seitenanpralls ein Seitenverkleidungselement (32) befestigt ist, oder dass an der Schubstange (12) der Vorrichtung (10) zur Durchführung einer Simulation eines Straffungsvorgangs eines Sicherheitsgurtes bei einem Aufprall ein Sicherheitsgurt befestigt ist, oder
dass an der Schubstange (12) der Vorrichtung (10) zur Durchführung einer Simulation der Bewegung der Lenksäule bei einem Aufprall eine Lenksäule befestigt ist, und dass die Vorrichtung (10) mit einem Zylinder (14) ausgestattet ist, der eine Druckkammer aufweist, deren Volumen durch einen Kolben begrenzt wird, der über eine Schubstange (12) auf das Versuchsobjekt (56, 58) wirkt, um die genannten zusätzlichen Kräfte zusätzlich zu den durch einen Crash-schlitten (54) ausgeübten Kräften in das Versuchsobjekt (56, 58) einzubringen, sowie mit einer auf die Schubstange, (12) wirkenden Bremseinrichtung (20), wobei die Vorrichtung eine Regeleinrichtung umfasst, welche dazu ausgelegt ist, die über die Bremseinrichtung (20) auf die Schubstange (12) wirkende Bremskraft während der Durchführung eines Versuches derart zu regeln, dass die zusätzlichen Kräfte entsprechend einer gewünschten Beschleunigungskurve in das Versuchsobjekt (56, 58) eingebracht werden.

2. Versuchsaufbaus nach Anspruch 1,
**dadurch gekennzeichnet,**
**dass** die Druckkammer mit einem Druckspeicher verbindbar ist, insbesondere über ein Schnellkupplungsventil, und/oder dass die Druckkammer ein Sicherheitsventil zur Begrenzung des Maximaldruckes aufweist.

3. Versuchsaufbau nach einem der vorstehenden Ansprüche,
**dadurch gekennzeichnet,**
**dass** die Schubstange (12) mit einem variablen Aufbau (30, 32) verbindbar ist, insbesondere über ein an einem Ende der Schubstange (12) ausgebildetes Innengewinde (16), und/oder
**dass** ein Drucksensor an die Druckkammer angeschlossen ist, dessen Ausgangssignal an eine Steuereinrichtung zur Steuerung der Druckerzeugung übertragbar ist.

4. Versuchsaufbau nach einem der vorstehenden Ansprüche,
**dadurch gekennzeichnet,**
**dass** die auf die Schubstange (12) wirkende Bremseinrichtung (20) hydraulisch betätigbar ist, und/oder dass die Bremskraft über ein Hydraulikventil (27), insbesondere ein Servoventil, regelbar ist, und/oder dass die Bremskraft mittels eines Hydraulikventils regelbar ist, welches über eine Pumpe und einen Zwischenspeicher versorgbar ist.

5. Versuchsaufbau nach einem der vorstehenden Ansprüche,
**dadurch gekennzeichnet,**
**dass** die Vorrichtung wenigstens einen Beschleunigungssensor, insbesondere zwei voneinander unabhängige Beschleunigungssensoren, zum Messen der Beschleunigung der Schubstange (12) aufweist, und die Bremskraft in Abhängigkeit von dessen Ausgangswert regelbar ist, und/oder dass bei fehlender Stromzufuhr eine maximale Bremskraft auf die Schubstange wirkt.

6. Versuchsaufbau nach einem der vorstehenden Ansprüche,
**dadurch gekennzeichnet,**
**dass** die Vorrichtung einen Sensor zum Messen des Ausfahrweges der Schubstange (12) aufweist, und/oder dass die Schubstange (12) einen dreieckigen Querschnitt aufweist, wobei die Bremseinrichtung (20) bevorzugt drei jeweils an einer Oberfläche der Schubstange (12) anliegende Bremsklötze umfasst, welche hydraulisch steuerbar sind.

7. Versuchsaufbau nach einem der vorstehenden Ansprüche,
**dadurch gekennzeichnet,**
**dass** die Verbindung zwischen der Schubstange (12) und dem Kolben über ein Energie absorbierendes Bauteil, insbesondere über ein mechanisches Stauchrohr, hergestellt ist, und/oder die Vorrichtung auf einem Crash-Schlitten auftretenden Beschleunigungen standhält, insbesondere Beschleunigungen bis zu 30g.

## Claims

1. A test setup for the carrying out of a crash sled test using an apparatus (10) for introducing additional forces on the carrying out of so-called crash tests, in particular of so-called inverse crash tests, in which the deceleration forces of a real impact which act on a test object are simulated in that a crash sled (54) is accelerated in accordance with a real deceleration curve simulating a real crash test, **characterized in that** the apparatus (10) is mounted on a crash sled (54) together with a test object (56, 58), in particular on a crash sled for so-called inverse crash tests, or **in that** the apparatus (10) is mounted in a fixed position separately from a crash sled;
**in that** a footwell unit (30) is fastened to the connecting rod (12) of the apparatus (10) for the carrying out of a simulation of a footwell intrusion; or
**in that** a side trim element (32) is fastened to the connecting rod (12) of the apparatus (10) for the carrying out of a simulation of a side strike; or
**in that** a safety belt is fastened to the connecting rod (12) of the apparatus (10) for the carrying out of a simulation of a tightening process of a safety belt on an impact; or
**in that** a steering column is fastened to the connecting rod (12) of the apparatus (10) for the carrying out of a simulation of the movement of the steering column on an impact; and **in that** the apparatus (10) is equipped with a cylinder (14) which has a pressure chamber whose volume is limited by a piston which acts on the test object (56, 58) via a connecting rod (12) in order to introduce the named additional forces into the test object (56, 58) in addition to the forces exerted by a crash sled (54) and said apparatus (10) is equipped with a braking device (20) acting on the connecting rod (12), with the apparatus comprising a regulation device which is configured to regulate the braking force acting on the connecting rod (12) via the braking device (20) during the carrying out of a test such that the additional forces are introduced into the test object (56, 58) in accordance with a desired acceleration curve.

2. A test setup in accordance with claim 1,
**characterized in that**
the pressure chamber is connectable to a pressure reservoir, in particular via a fast-coupling valve; and/or **in that** the pressure chamber has a safety valve to limit the maximum pressure.

3. A test setup in accordance with one of the preceding claims,
**characterized in that**
the connecting rod (12) is connectable to a variable setup (30, 32), in particular via an internal thread (16) formed at an end of the connecting rod (12); and/or
**in that** a pressure sensor is connected to the pressure chamber and its output signal can be transmitted to a control device for controlling the generation of pressure.

4. A test setup in accordance with any one of the preceding claims,
**characterized in that**
the braking device (20) acting on the connecting rod (12) can be actuated hydraulically; and/or **in that** the braking force can be regulated via a hydraulic valve (27), in particular via a servo valve; and/or **in that** the braking force can be regulated by means of a hydraulic valve which can be fed via a pump and a buffer store.

5. A test setup in accordance with any one of the preceding claims,
**characterized in that**
the apparatus has at least one acceleration sensor, in particular two mutually independent acceleration sensors, for measuring the acceleration of the connecting rod (12) and the braking force can be regulated in dependence on the output value of said acceleration sensor; and/or **in that** a maximum braking force acts on the connecting rod on a lack of current supply.

6. A test setup in accordance with any one of the preceding claims,
**characterized in that**
the apparatus has a sensor for measuring the extension path of the connecting rod (12); and/or **in that** the connecting rod (12) has a triangular cross-section, with the braking device (20) preferably comprising three brake blocks which each contact a surface of the connecting rod (12) and which are hydraulically controllable.

7. A test setup in accordance with any one of the preceding claims,
**characterized in that**
the connection between the connecting rod (12) and the piston is established via a component which absorbs energy, in particular via a mechanical compression tube; and/or **in that** the apparatus withstands accelerations occurring on a crash sled, in particular accelerations up to 30 g.

## Revendications

1. Structure d'essai pour exécuter un essai de collision sur chariot, comprenant un dispositif (10) pour appliquer des forces additionnelles lors de l'exécution de ce que l'on appelle des essais de collision, en particulier de ce que l'on appelle des essais de collision inverse, dans lesquels les forces de ralentissement, agissant sur un objet d'essai, d'une collision réelle sont simulées en accélérant un chariot de collision (54) en correspondance avec une courbe de ralentissement réelle simulant un essai de collision réel,
**caractérisée en ce que** le dispositif (10) est monté conjointement avec un objet d'essai (56, 58) sur un chariot de collision (54), en particulier un chariot de collision pour ce que l'on appelle des essais de collision inverse, ou **en ce que** le dispositif (10) est monté de façon stationnaire séparément d'un chariot de collision ; **en ce que**, pour effectuer une simulation d'une intrusion dans l'espace pour les pieds, une unité formant espace pour les pieds (30) est fixée sur la tige de poussée (12) du dispositif (10), ou **en ce que**, pour effectuer une simulation d'une collision latérale, un élément d'habillage latéral (32) est fixé sur la tige de poussée (12) du dispositif (10), ou **en ce que**, pour effectuer une simulation d'un processus de tensionnement d'une ceinture de sécurité en cas de collision, une ceinture de sécurité est fixée sur la tige de poussée (12) du dispositif (10), ou
**en ce que**, pour effectuer une simulation du mouvement de la colonne de direction en cas de collision, une colonne de direction est fixée sur la tige de poussée (12) du dispositif (10), et **en ce que** le dispositif (10) est équipé d'un cylindre (14) qui comporte une chambre de pression dont le volume est limité par un piston, lequel agit via une tige de poussée (12) sur l'objet d'essai (56, 58), afin d'appliquer lesdites forces additionnelles en supplément aux forces exercées par un chariot de collision (54) dans l'objet d'essai (56, 58), et comprenant un dispositif de freinage (20) agissant sur la tige de poussée (12), dans lequel le dispositif inclut un système de régulation qui est conçu pour réguler la force de freinage agissant via le dispositif de freinage (20) sur la tige de poussée (12) pendant l'exécution d'un essai, de telle façon que les forces supplémentaires sont appliquées dans l'objet d'essai (56, 58) en correspondance avec une courbe d'accélération souhaitée.

2. Structure d'essai selon la revendication 1,
**caractérisée en ce que** la chambre de pression est susceptible d'être reliée à un accumulateur de pression, en particulier via une soupape à accouplement rapide, et/ou
**en ce que** la chambre de pression comporte une soupape de sécurité pour limiter la pression maximum.

3. Structure d'essai selon l'une des revendications précédentes,
**caractérisée en ce que** la tige de poussée (12) est susceptible d'être reliée à une structure variable (30, 32), en particulier via un pas de vis intérieur (16) réalisé à une extrémité de la tige de poussée (12), et/ou
**en ce qu'**un capteur de pression est raccordé à la chambre de pression, dont le signal de sortie est susceptible d'être transmis à un dispositif de commande pour commander la génération de pression.

4. Structure d'essai selon l'une des revendications précédentes,
**caractérisée en ce que** le dispositif de freinage (20) agissant sur la tige de poussée (12) est susceptible d'être actionné par voie hydraulique, et/ou
**en ce que** la force de freinage est susceptible d'être régulée via une soupape hydraulique (27), en particulier via une servo-valve, et/ou
**en ce que** la force de freinage est susceptible d'être régulée au moyen d'une soupape hydraulique qui est susceptible d'être alimentée via une pompe et un accumulateur intermédiaire.

5. Structure d'essai selon l'une des revendications précédentes,
**caractérisée en ce que** le dispositif comprend au moins un capteur d'accélération, en particulier deux capteurs d'accélération indépendants l'un de l'autre, pour mesurer l'accélération de la tige de poussée (12), et la force de freinage est susceptible d'être régulée en fonction de sa valeur de sortie, et/ou
**en ce qu'**en absence d'une alimentation en courant une force de freinage maximum agit sur la tige de poussée.

6. Structure d'essai selon l'une des revendications précédentes,
**caractérisée en ce que** le dispositif comprend un capteur pour mesurer le trajet de déploiement de la tige de poussée (12), et/ou
**en ce que** la tige de poussée (12) présente une section transversale triangulaire, le dispositif de freinage (20) incluant de préférence trois patins de freinage appliqués chacun sur une surface de la tige de poussée (12), lesquels sont susceptibles d'être pilotés par voie hydraulique.

7. Structure d'essai selon l'une des revendications précédentes,
**caractérisée en ce que** la liaison entre la tige de poussée (12) et le piston est établie via un composant absorbant l'énergie, en particulier via un tube à écrasement mécanique, et/ou
**en ce que** le dispositif résiste à des accélérations apparaissant sur un chariot de collision, en particulier des accélérations allant jusqu'à 30 g.
